# EUROPEAN PATENT SPECIFICATION

(11) **EP 1 114 362 B1**
(45) Date of publication and mention of the grant of the patent: **23.03.2005**
(21) Application number: 99935043.2
(22) Date of filing: 16.07.1999
(51) Int. Cl.: G05D 29/00, F24F 11/02

(54) **DIGITAL ELECTRONIC CONTROL UNIT**
DIGITALE ELEKTRONISCHE STEUEREINHEIT
UNITE DE COMMANDE ELECTRONIQUE NUMERIQUE

(43) Date of publication of application: 11.07.2001
(73) Proprietor: Vasu Tech Limited, New Delhi 110065 (IN)
(72) Inventor: BHATNAGAR, Rajiv, Mumbai 400052, Maharashtra (IN)
(74) Representative: Robson, Aidan John
(86) International application number: PCT/IN1999/000031
(87) International publication number: WO 2001/006335

(56) References cited:
- EP-A- 0 642 214
- EP-A- 0 924 588
- EP-A- 0 927 919
- WO-A-98/20615
- US-A- 4 298 946
- US-A- 4 836 442
- US-A- 5 412 782
- US-A- 5 682 949
- US-A- 5 889 949
- US-A- 5 920 699

## Description

### FIELD OF THE INVENTION

This invention relates to a digital electronic control unit with real-time-clock based control, remote control and networking capabilities for controlling the functions of domestic and commercial appliances such as washing machines, refrigerators, dishwashers, electric ovens, and the like.

### BACKGROUND

Many modem control systems that are used for industrial or commercial applications incorporate the following features :
1) Real-time-clock (Time-of-day) based control actions.
2) Networking of various devices inorder to share resources or data, as well as to provide remote access to a device over the network.
3) Remote control using a hand-held remote control device.

The use of computers in control systems has further increased the need for such intercommunications. Finally, the rapid growth of the Internet and its fast expanding reach into offices and homes in the movement towards the "networked society" of the near future is expected to generate the demand for internetworking the various. These developments have led to the need for communication abilities even in the average devices of the home. It is therefore expected that domestic appliances would also require such capabilities.

Most designs of devices with such capabilities utilise microcomputers or microcontrollers as the key component for control. While this approach works very well, it is not the most cost-effective or efficient for many applications. In particular. the cost-sensitive, mass-volume application area of domestic appliances require special interface circuits, such as AC power switching devices, for which additional hardware is needed when using microcontrollers. This additional hardware can easily increase the cost and size of the control for the appliance very significantly. The use of special custom hardware provides a better solution, but existing designs of such custom hardware are very specialised to a particular application or appliance. Each appliance product therefore needs its own dedicated design of custom hardware.

### Prior Art

EP 0927919 and EP 0924588 disclose an electronic thermostat control unit and its use in multipoint temperature controllers for refrigeration and heating systems.

The most desireable solution is one in which a specially-designed hardware suitable for the entire range of appliances, is configured for use in each specific product. Such a design would provide the flexibility of microprocessor-based designs at significasntly lower cost and size.

The object of this invention is to provide a flexible, digital electronic control unit for use in domestic and commercial appliances, that provides the capabilities of real-time based control, remote control and networking.

To achieve the said objective this invention provides a digital electronic control unit comprising:
- a plurality of sensor drive circuits each of which drives an external sensing element, the said sensing elements converts the sensed parameter to an electrical signal,
- an analog multiplexer that receives the signal from each of the external sensing elements, and selectively routes one of the signal to its output,
- an analog-to-digital converter connected to the output of the said analog multiplexer, that converts the multiplexer output to digital form,
- a linearity, sensitivity and offset correction circuit connected to the output of the said analogue-to-digital converter for correcting the digital values received from it, using sensor calibration data stored in non-volatile memory,
- a central control unit that receives the corrected output from the said sensitivity offset and linearity correction circuit, and generates the control signals necessary for operation of the appliance, as well as the selection signals for controlling the said analog multiplexer, using control data supplied by the non-volatile memory,
- a digital noise filter connected to the output of the said central control unit, to eliminate spurious outputs,
- a digital de-multiplexer connected to the output of the said digital noise filter and controlled by the said central control unit for selecting the output to which the input from the said digital noise filter is to be connected,
- a plurality of control latches, each being connected at one output of the said digital de-multiplexer, for storing the digital data received from it and actuating the necessary part of the appliance in order to correct the sensed parameter,
- a non-volatile memory that stores the data and control parameters required for the operation of the said central control unit, linearity sensitivity and offset correction circuits, output drive and protection circuits.
- a clock oscillator that provides the timing signals necessary for the operation of required circuits of the digital electronic control unit, characterised in that the said central control unit is further connected to at least one of the following at its input:
   - a real-time clock that provides time-of-day data,
   - a remote control interface unit, that provides the ability to receive user input and provide responses to the user from/to a remote control device,
   - a network interface unit, that provides the capability for bidirectional transfer of data between the digital control unit and other devices.

The said remote control interface unit is an infra-red or ultrasonic or radio frequency remote interface units

The said network interface unit is is for a Transport Control Protocol / Internet Protocol (TCP/IP) based network such as for Internet connectivity.

The said network interface unit is is for a Controller Area Network (CAN) Bus based network.

The said sensing element are linear or non-linear transducers.

The said central control unit and the said linearity offset and sensitivity correction circuit are digital logical circuits.

The output of each of the said control latches is connected to an output drive and protection circiut to drive a switching device to actuate the necessary part of the appliance in order to correct the sensed parameter

To provide user-defined inputs and selections for defining the desired values of the control parameters, a plurality of user input means are connected to the said central control unit through said analog multiplexer, analog-to-digital converter, and linearity offset and sensitivity correction circuit.

The user variable means are potentiometers or switches.

A display drive unit is connected to the output of the said central control unit for the selective display of either the sensed parameter or the user-specified value from the user input means on an external display device.

An audio drive unit is connected to the output of the said central control unit for generating audio signals for user's attention using an external audio transducer.

Power supply for powering the digital electronic control unit consists of a low loss capacitive voltage dropping network followed by a voltage clamping device, a rectifier and a filter network to provide a DC voltage.

Entire digital electronic control unit including the real-time clock, remote control interface unit and netwok interface unit except power supply, sensing elements, user variable means and external switching devices, is implemented as a custom Application Specific Integrated Circuit (ASIC), to provide a miniature and cost effective control element. The ASIC also excludes non-volatile memory in order to provide larger capacities for storage of data, but includes a memory interface block for connecting to the external non-volatile memory.

The output drive and protection circuit includes a thermal protection circuit, an over-current protection circuit, over-voltage protection circuit and a soft start circuit for providing an effective reduced voltage start up to the load during the initial period of turn-on.

The frequency of the clock oscillator ranges from 32 KHz - 25 MHz, preferably 4 MHz.

The network inteface unit, in one embodiment is for connecting to a TCP/IP protocol based network, such as for connecting to the Internet.

In another embodiment, the network interface unit is designed for connecting to a Controller Area Network (CAN) system.

In yet another embodiment, the network interface unit is designed for connecting to a cable network.

A digital electronic control unit has been described in our co-pending PCT application No. PCT/IN 99/00029. The instant application includes the facilities for networking, remote control and time-of-day based control using a real-time clock. These facilities have not been claimed or described in the said co-pending application.

The invention will now be described with reference to the accompanying drawings :
Fig - 1 shows the digital electronic control unit including real-time clock, remote control interface, and network interface, according to this invention, using potentiometers for providing user-variable input.
Fig - 2 shows an alternate embodiment of the unit. using switches for providing user-variable input.
Fig - 3 shows an embodiment in which the entire digital electronic control circuit including the real-time clock, remote control interface unit and netwok interface unit except the power supply, external sensing elements, user variable means and external switching devices, is implemented as an Application Specific Integrated Circuit (ASIC).
Fig - 4 shows and alternative embodiment in the form of a ASIC in which the non-volatile memory is also external to the ASIC. This facilitates the use of larger capacities of non-volatile memory.
Fig - 5 shows the internal structure of the output drive and protection circuit.
Fig - 6 shows the transformerless power-supply used to provide power to the electronic control unit.
Fig - 7 shows an application of the electronic control unit in a washing machine.
Fig - 8 shows an application of the electronic control unit in a refrigerator.

Refering to the drawings, items [1a - 1d] show the external sensing elements. Sensor drive circuits [2a - 2d] provide the bias signals for the sensors. Analog multiplexer [3] selects the signal from one of the sensing elements based on the selection data from the Central Control Unit [6] which is then converted to digital form by analog-to-digital converter [4]. This digital output is adjusted for sensor linearity, offset and sensitivity by linearity, sensitivity and offset correction circuit [5] that receives the correction factor data in digital form from non-volatile memory [17]. This corrected digital output is supplied to central control unit [6] which stores the data. User input is received by means of external potentiometers [12a - 12c] and is used by the central control unit [6] alongwith the stored digital data received from the linearity, sensitivity and offset correction circuit [5] to generate the control signal for correcting the sensed parameter. This control signal is passed through digital filter [7] to remove noise and then applied to the input of digital demultiplexer [8] which routes it to one of the control latches [9a - 9f] under the control of the central control unit [6]. The output of each control latch is connected to an output drive and protection circuit [10a - 10f]. Each output drive and protection circuit drives an external switching device [11a - 11f] to actuate the relevant part of the appliance to correct the sensed parameter. The central control unit [6] drives a display drive unit [13] for displaying user input or sensed parameter value on an external display unit [14], and also an audio drive unit [15] for providing audio output through an external audio transducer [16]. The central control unit [6] receives time-of-day data from real-time-clock unit [C] which enables it to perform control actions based on time-of-day requirements. A remote-control interface unit [R] connected to the said central control unit [6] provides the ability to receive user input data remotely form a hand-held remote control unit. A network interface unit [N] connects the said central control unit [6] to external devices, which may be other similar digital control units or other devices such as computers, and enables the exchange of data between the various devices in the network. A Clock Circuit [18] and non-volatile-memory [17] are connected to various points in the circuit as indicated.

In Fig-2, the user variable inputs originate from external switches [20a - 20c], instead of potentiometers.

Fig.-3 shows an implementation of the electronic control unit including the real-time clock, remote control interface unit and netwok interface unit and excluding the external blocks [1a-1d], [11a-11f], [12a-12c], [14], [16], [19], and [20a-20c] in the form of an Application Specific Integrated Circuit (ASIC) [21] to provide a solution that is both very miniature and cost-effective.

Fig-4 shows another embodiment using an ASIC [22] in which the non-volatile memory is external to the ASIC inorder to provide for larger storage capacity. A non-volatile memory interface block [23] is provided in the ASIC for connecting to the external non-volatile memory [24].

Fig-5 shows the internal structure of each output drive and protection circuit. Overcurrent protection [25], over-heat protection [26] and over-voltage protection [27] circuits inside each output drive and protection circuit monitor the electrical conditions at the output of each external switching device [11a-11f] and limit or cut-off the drive to it in case of overload conditions. Additionally, a soft-start drive circuit [28] provides a gradual start-up drive signal inorder to minimise stress on the external switching device [11a-11f] as well as the load (appliance).

Fig.-6 shows the transformerless power-supply [29] of 2 to 8 volts, used to provide power to the digital electronic control unit. A capacitive voltage dropping network [30], with a voltage clamping zener diode [31] reduces the input high-voltage A.C. voltage to a low value. This low value a.c. voltage is then rectified and filtered by a diode [32] and then filtered by a capacitor [33] to produce a low voltage d.c. supply that feeds power to the circuit.

Fig-7 shows an application of the electronic contol unit in a washing machine [34]. A water level sensing element [35] placed inside the wash tank senses the water level in the tank, a temeperature sensing element [36] inside the wash tank senses the temperature of the water while a detergent level sensing element [37] placed inside the detergent supply tank senses the detergent level. The water-fill valve [38], heating coil [39], detergent-fill valve [40], agitator motor [41], motor-reversing switch [42] and water-drain valve [43] are controlled by the electronic control unit [45] based on the signals received from the various sensing elements and from the user setting switches [44]. The status and user settings are displayed on the machine's user-interface panel [46] and when required, alarms are annunciated on the audio unit [47]. A handheld remote-control unit [RC] is also used to control the user settings and receive status information, remotely. A real-time-clock [CL] on the front panel of the washing-machine displays time-of-day information and can be used to set control actions, e.g. turning-on or turning-off the washing-machine at programmed times during the day. A network [NW] connects the washing machine to other appliances in the home and to home computer (not shown), to provide computer controlled operation from within the home.

Fig-8 shows an application of the electronic contol unit in a refrigerator [48]. A temperature sensing element [49] placed inside the freezer compartment senses the temperature near the cooling coils [50], another temperature sensing element [51] placed inside the main compartment senses the temperature inside that compartment while a third temperature sensing element [52] senses the temperature of the compressor housing. A door switch [53] located on the door frame senses the open-close condition of the referigerator's door. The digital electronic control unit [54] receives the signals from each of these sensing elements and operates the compressor unit [55], circulating fan [56], refrigerator light [57] and door-open alarm [58] based on the signals received from each of the sensing elements and switches.In addition, the refrigerator has a real-time-clock [RCL] display on the front-panel [FP] that is used to display the time-of-day as well as to define control actions at programmed times of day. The network interface inside the digital electronic control unit is also used to connect the refrigerator to a network [NET] in the home that connects the various appliances to a central home computer (not shown) for monitoring and control.

### WORKING :

Sensing elements [1a - 1d] (which may be linear or non-linear transducers) are driven by sensor drive circuits [2a - 2d] and produce analog voltage signals in response to sensed parameters. These analog voltage signals are applied to the inputs of analog multiplexer [3]. Analog multiplexer [3] outputs the signal from one of the sensing elements to analog-to-digital converter [4] under control of channel-select signals received from the central control unit [6]. Analog-to-digital converter [4] produces a digital output that is the equivalent of the analog voltage supplied at its input. This digital output corresponding to the signal received from the selected sensing element, is received by linearity and sensitivity and offset correction circuit [5] and modified by it, using data stored in non-volatile memory [17] at the time of manufacture of the digital electronic control unit, to correct for nonlinearities, offsets and sensitivity deviations in the sensing element's output. This produces a corrected, digital sensed parameter value. The central control unit and the linearity and sensitivity and offset correction circuit are digital logic circuits.

The corrected sensed parameter value is stored by the central control unit [6] which receives these values for each of the sensing elements. In addition, the central control unit [6] also receives user-supplied inputs from potentiometers [12a - 12c] or switches [20a - 20c]. The values of these inputs and the stored parameter values are evaluated by the central control unit [6] in accordance with control data that is supplied by the non-volatile memory [17]. The result of the evaluation is in the form of a digital value that is output from the central control unit [6] to the input of the demultiplexer [7] alongwith selection signals that determine the output to which the result is routed. The sequence of evaluation is repeated for each output of the demultiplexer in a repetitive manner.

In addition, the central control unit [6] also outputs digital signals for driving the display drive unit [13] and audio drive unit [15] in accordance with control data supplied by non-volatile memory [17].

The output from the demultiplexer is stored in one of the control latches [9a - 9f] based on the selection control signals generated by the central control unit [6], and is used to enable / disable the corresponding output drive and protection circuit [10a - 10f]. Each output drive and protection circuit [10a - 10f] when enabled by its corresponding control latch [9a - 9f] generates the signals necessary to drive the external switching device [11a - 11f] inorder to actuate the relevant part of the appliance to correct the sensed parameter. The output drive and protection circuit [10a - 10f] also monitors the load conditions continuously and deactivates the drive to the external switching device [11a - 11f] if overload conditions are encountered.

A real time clock unit [C] provides time-of-day input to the central control unit [6] for enabling control actions based on time-of-day values. A remote control interface unit [R] connected to the said central contrl unit [6] makes it possible for the user to input data remotely, instead of from the front panel of the digital control unit, with the help of a hand-held remote control device, which may be an infrared, ultrasonic or radio-frequency remote control transceiver. A network interface unit [N] connected to the said central control unit [6] provides the facility to connect the digital control unit to other devices, such as other similar digital control units or computers, inorder to exchange information.

Clock Circuit [18] based on a quartz Crystal oscillator in the 32 KHz - 25 Mhz freaquency range generates all the timing signals necessary to operate each circuit block. while a Power Supply [19] supplies the necessary voltage and current to each circuit block of the electronic control unit.

The present application includes the facilities for networking, remote control and time-of-day based control using a real-time clock.

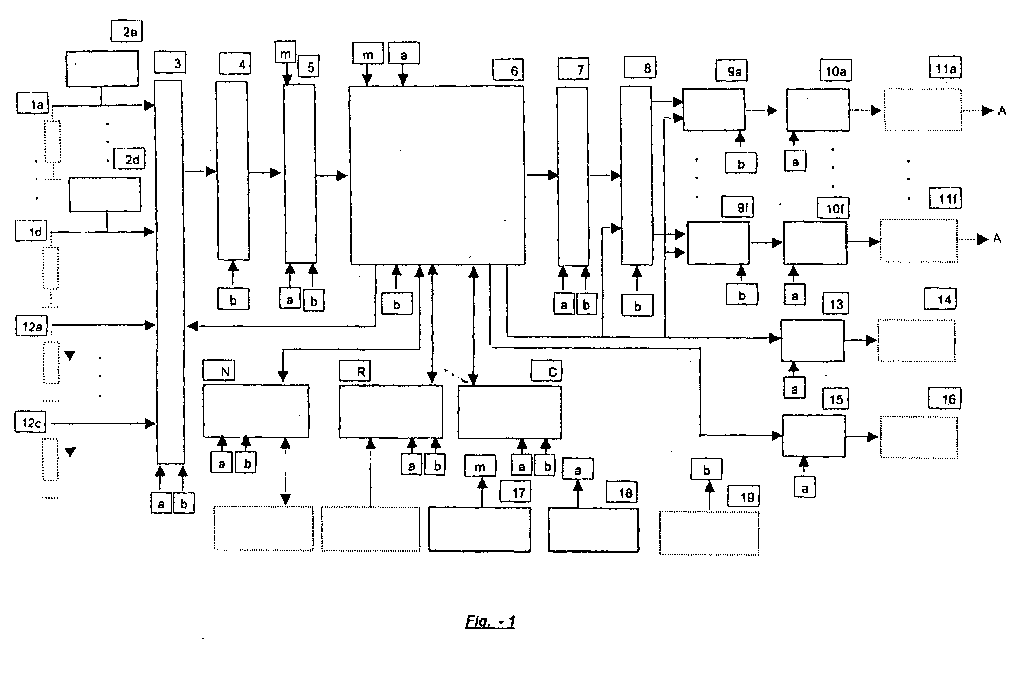

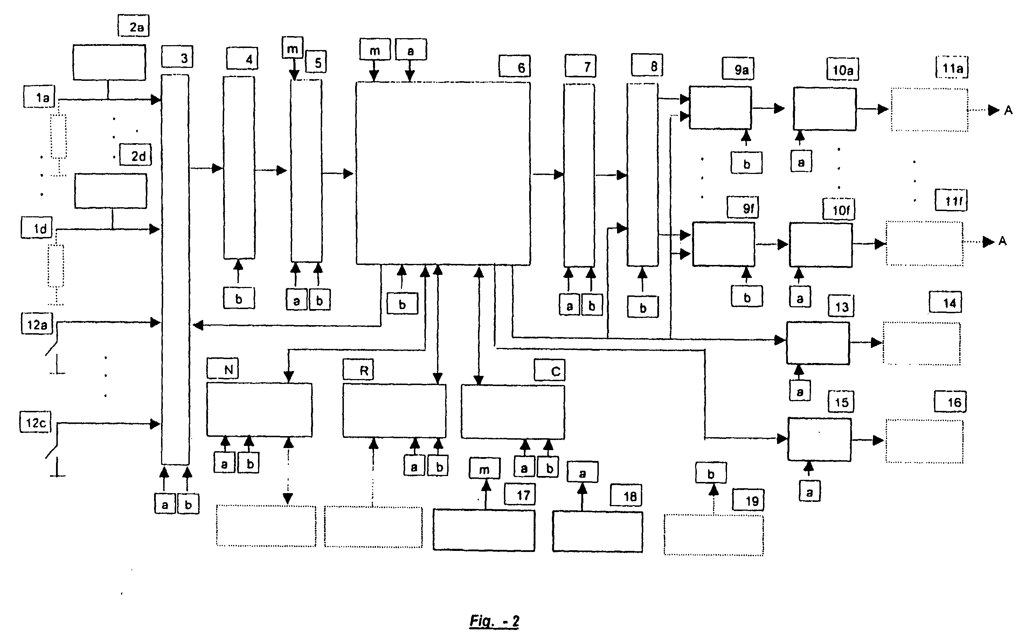

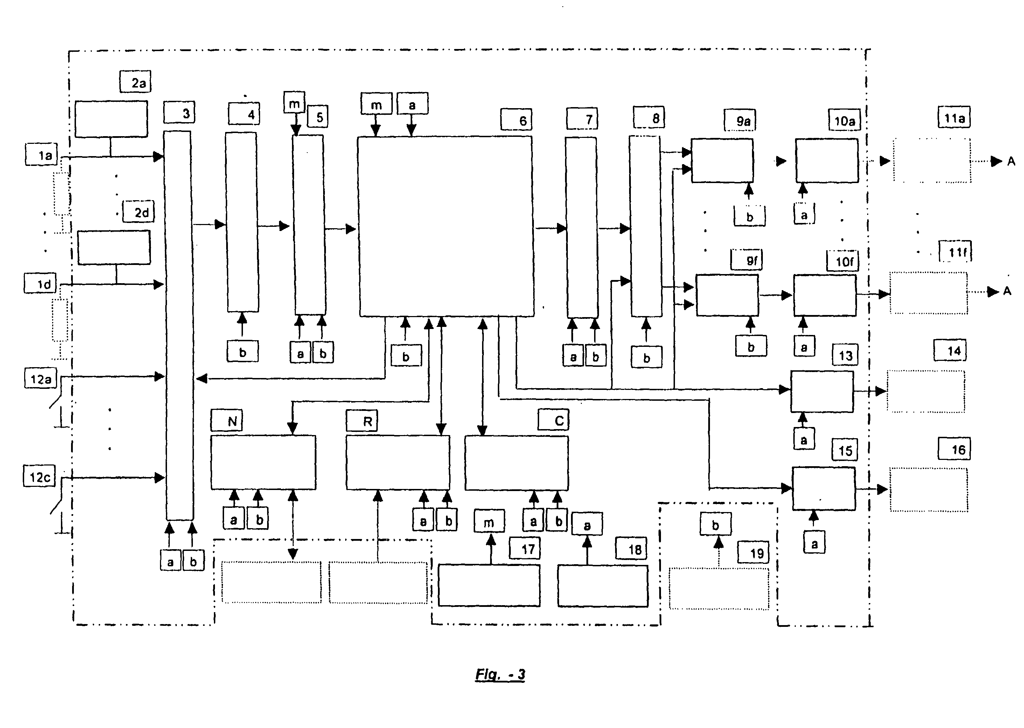

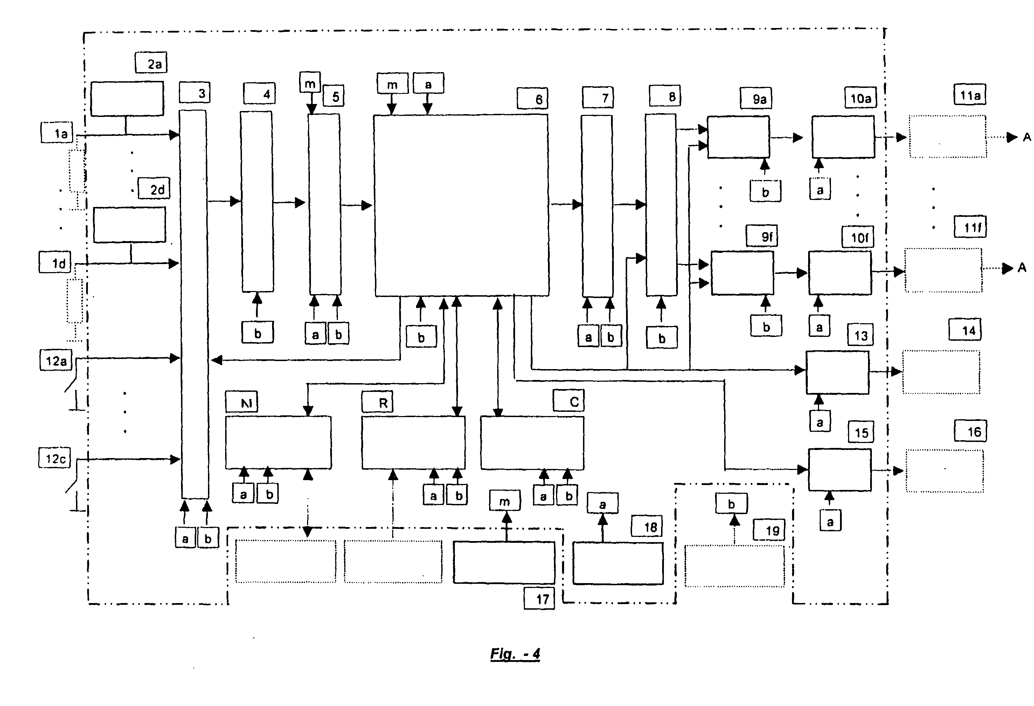

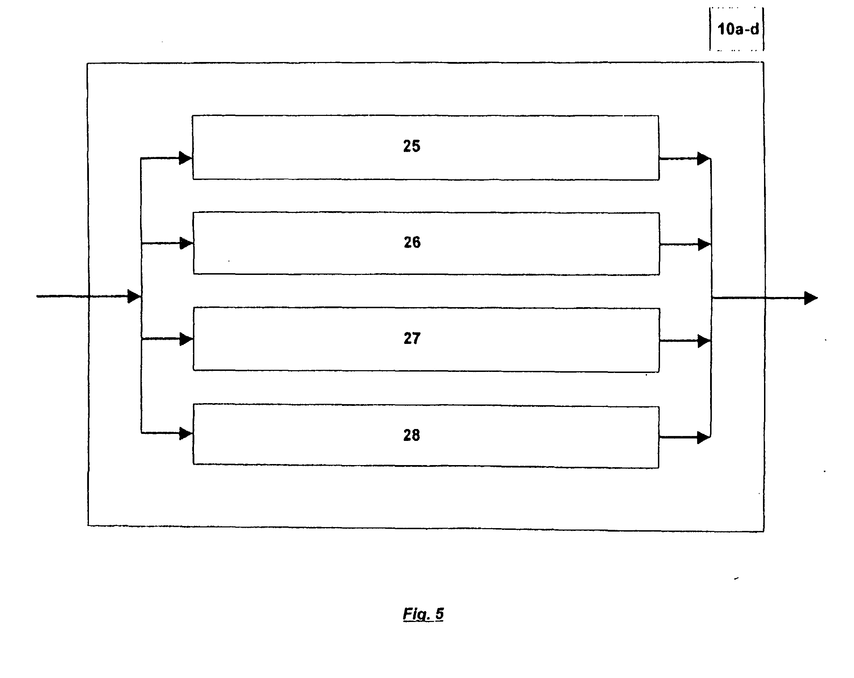

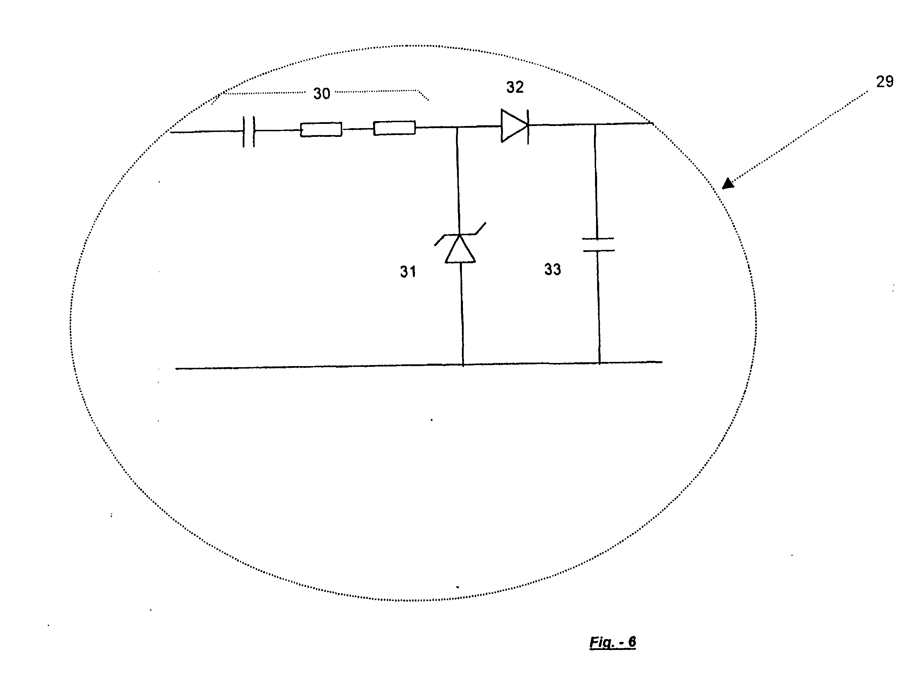

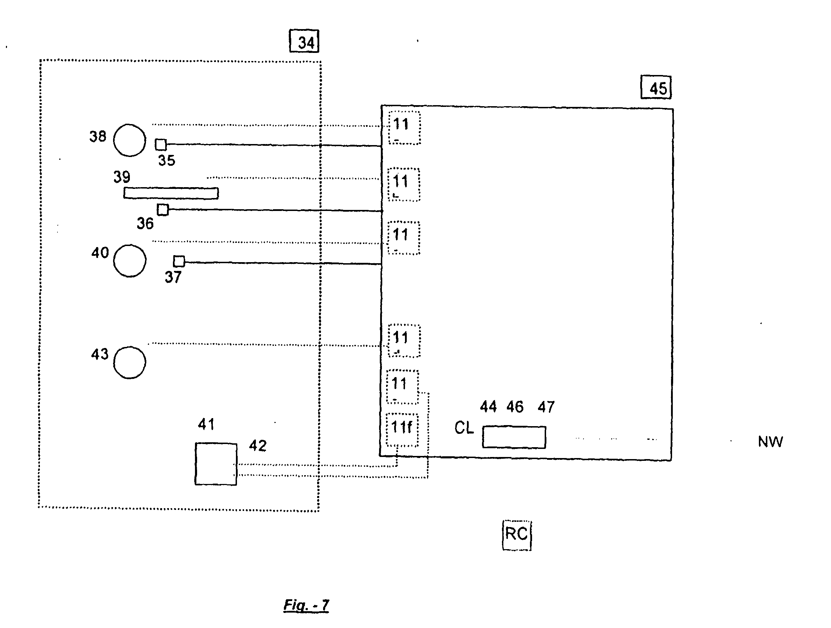

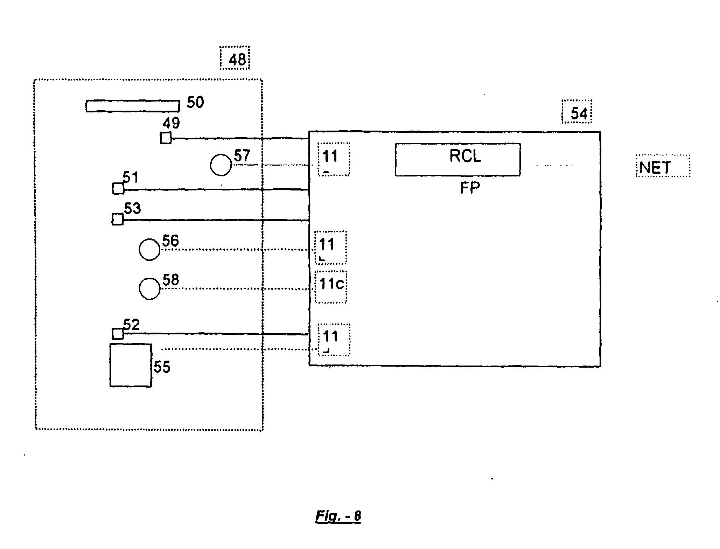

## Claims

1. A digital electronic control unit for controlling the functions of domestic and commercial appliances comprising:
- a plurality of sensor drive circuits (2a-2d) each of which drives an external sensing element (1a-1d), the said sensing elements (1a-1d) converts the sensed parameter to an electrical signal,
- an analog multiplexer (3) that receives the signal from each of the external sensing elements (1a-1d), and selectively routes one of the signal to its output,
- an analog-to-digital converter (4) connected to the output of the said analog multiplexer (3), that converts the multiplexer output to digital form,
- a linearity, sensitivity and offset correction circuit (5) connected to the output of the said analogue-to-digital converter (4) for correcting the digital values received from it, using sensor calibration data stored in a non-volatile memory (17),
- a central control unit (6) that receives the corrected output from the said linearity, sensitivity and offset correction circuit (5), and generates the control signals necessary for operation of an appliance, as well as the selection signals for controlling the said analog multiplexer (3), using control data supplied by the non-volatile memory (17),
- a digital noise filter (7) connected to the output of the said central control unit (6) to eliminate spurious outputs,
- a digital de-multiplexer (8) connected to the output of the said digital noise filter (7) and controlled by the said central control unit (6) for selecting the output to which the input from the said digital noise filter is to be connected,
- a plurality of control latches (9a-9f), each being connected at one output of the said digital de-multiplexer (8), for storing the digital data received from it and actuating the necessary part of the appliance in order to correct the sensed parameter,
- a non-volatile memory (17) that stores the data and control parameters required for the operation of the said central control unit (6), linearity sensitivity and offset correction circuits (5), output drive and protection circuits (10a-10f),
- a clock oscillator (18) that provides the timing signals necessary for the operation of required circuits of the digital electronic control unit,
**characterised in that,**
- the said central control unit (6) is further connected to at least one of the following at its input:
- a real-time clock (C) that provides time-of-day data,
- a remote control interface unit (R), that provides the ability to receive user input and provide responses to the user from/to a remote control device,
- a network interface unit (N), that provides the capability for bidirectional transfer of data between the digital control unit and other devices.

2. A digital electronic control unit as claimed in claim 1 **characterised in that** said remote control interface unit (R) is an infra-red or ultrasonic or radio frequency remote interface units.

3. A digital electronic control unit as claimed in claim 1 **characterised in that** said remote control interface unit (R) is a radio-frequency remote interface unit.

4. A digital electronic control unit as claimed in claim 1 **characterised in that** said remote control interface unit (R) is an ultrasonic remote interface unit.

5. A digital electronic control unit as claimed in claim 1 **characterised in that** said network interface unit (N) is for a Transport Control Protocol/Internet Protocol (TCP/IP) based network such as for Internet connectivity.

6. A digital electronic control unit as claimed in claim 1 **characterised in that** said network interface unit (N) is for a Controller Area Network (CAN) Bus based network.

7. A digital electronic control unit as claimed in claim 1 **characterised in that** said network interface unit (N) is for a cable network.

8. A digital electronic control unit as claimed in claim 1 **characterised in that** said sensing element (1a-1d) are linear or non-linear transducers.

9. A digital electronic control unit as claimed in claim 1 **characterised in that** said central control unit (6) and the said linearity, sensitivity and offset correction circuit 5 are digital logical circuits.

10. A digital electronic control unit as claimed in claim 1 **characterised in that** the output of each of the said control latches (9a-9f) is connected to the output drive and protection circuit (10a-10f) to drive an external switching device (11a-11f) to actuate the necessary part of the appliance in order to correct the sensed parameter.

11. A digital electronic control unit as claimed in claim 1 **characterised in that** to provide user-defined inputs and selections for defining the desired values of the control parameters, a plurality of user input means are connected to the said central control unit (6) through said analog multiplexer (3), analog-to-digital converter (4), and linearity, sensitivity and offset correction unit (5).

12. A digital electronic control unit as claimed in claim 11 **characterised in that** the user variable means are potentiometers or switches (12a-12c, 20a-20c).

13. A digital electronic control unit as claimed in claim 11 **characterised in that** a display drive unit (13) is connected to the output of the said central control unit (6) for the selective display of either the sensed parameter or the user-specified value from the user input means on an external display device (14).

14. A digital electronic control unit as claimed in claim 1 **characterised in that** an audio drive unit (15) is connected to the output of the said central control unit (6) for generating audio signals for user's attention using an external audio transducer (16).

15. A digital electronic control unit as claimed in claim 1 **characterised in that** power supply (29) for powering the digital electronic control unit consists of a low loss capacitive voltage dropping network (30) followed by a voltage clamping device (31), a rectifier and a fitter network (32, 33) to provide a DC voltage.

16. A digital electronic control unit as claimed in any of the preceding claims **characterised in that** entire digital electronic control unit including the real-time clock (R), remote control interface unit (R) and network interface unit (N) except power supply, sensing elements, user variable means and external switching devices, is implemented as a custom Application Specific Integrated Circuit (ASIC) (22), to provide a miniature and cost effective control element.

17. A digital electronic control unit as claimed in claim 16 **characterised in that** the ASIC also excludes non-volatile memory in order to provide larger capacities for storage of data, but includes a memory interface block (23) for connecting to an external non-volatile memory (24).

18. A digital electronic control unit as claimed in claim 10 **characterised in that** output drive and protection circuit (10a-10f) includes a thermal protection circuit (26), an over-current protection circuit (25), over-voltage (27) protection circuit and a soft start circuit (28) for providing an effective reduced voltage start up to the load during the initial period of turn-on.

19. A digital electronic control unit as claimed in claim 1 **characterised in that** frequency of the clock oscillator (18) ranges from 32 KHz - 25 MHz.

20. A digital electronic control unit as claimed in claim 19 **characterised in that** frequency of the clock oscillator (18) is preferably 4 MHz.

## Patentansprüche

1. Digitale elektronische Steuereinheit zum Steuern der Funktionen von Haushalts- und Gewerbegeräten, umfassend:
- eine Mehrzahl von Sensoransteuerschaltungen (2a-2d), die jeweils einen externen Messgeber (1a-1d) ansteuern, wobei der genannte Messgeber (1a-1d) die abgetasteten Parameter in ein elektrisches Signal umwandelt,
- einen Analogmultiplexer (3), der das Signal von jedem der externen Messgeber (1a-1d) empfängt und eines der Signale selektiv zu seinem Ausgang leitet,
- einen Analog-Digital-Wandler (4), der mit dem Ausgang des genannten Analogmultiplexers (3) verbunden ist, der den Multiplexerausgang in die digitale Form umsetzt,
- eine Linearitäts-, Empfindlichkeits- und Offsetkorrekturschaltung (5), die mit dem Ausgang des genannten Analog-Digital-Wandlers (4) verbunden ist zum Korrigieren der von ihm empfangenen digitalen Werte unter Verwendung von in einem nichtflüchtigen Speicher (17) gespeicherten Sensorkalibrierdaten,
- eine zentrale Steuereinheit (6), die den korrigierten Ausgang von der genannten Linearitäts-, Empfindlichkeits- und Offsetkorrekturschaltung (5) empfängt und die für den Betrieb eines Geräts notwendigen Steuersignale sowie die Auswahlsignale zum Steuern des genannten Analogmultiplexers (3) unter Verwendung von Steuerdaten erzeugt, die von dem nichtflüchtigen Speicher (17) zugeführt werden,
- einen digitalen Entstörfilter (7), der mit dem Ausgang der genannten zentralen Steuereinheit (6) verbunden ist, um Störausgänge zu eliminieren,
- einen Digitaldemultiplexer (8), der mit dem Ausgang des genannten digitalen Entstörfilters (7) verbunden ist und von der genannten zentralen Steuereinheit (6) gesteuert wird, um den Ausgang auszuwählen, mit dem der Eingang von dem genannten digitalen Entstörfilter zu verbinden ist,
- eine Mehrzahl von Steuer-Haltespeicher (9a-9f), die jeweils an einem Ausgang des genannten Digitaldemultiplexers (8) angeschlossen sind, zum Speichern der von ihm erhaltenen digitalen Daten und zum Betätigen des notwendigen Teils des Geräts, um den abgetasteten Parameter zu korrigieren,
- einen nichtflüchtigen Speicher (17), der die für den Betrieb der genannten zentralen Steuereinheit (6), der genannten Linearitäts-, Empfindlichkeits- und Offsetkorrekturschaltungen (5),
Ausgangsansteuer- und Schutzschaltungen (10a-10f) erforderlichen Daten und Steuerparameter speichert,
- einen Taktgeber (18), der die für den Betrieb erforderlicher Schaltungen der digitalen elektronischen Steuereinheit notwendigen Taktsignale erzeugt,
**dadurch gekennzeichnet,**
- **dass** die genannte zentrale Steuereinheit (6) des Weiteren mit wenigstens einem der Folgenden an ihrem Eingang verbunden ist:
- einer Echtzeituhr (C), die Zeitdaten erzeugt,
- eine Fernsteuerungsschnittstelleneinheit (R), die die Fähigkeit verleiht, Benutzereingaben zu erhalten und Antworten an den Benutzer von/zu einer Fernsteuerungseinheit zu liefern,
- eine Netzschnittstelleneinheit (N), die die zweiseitige Datenübertragung zwischen der digitalen Steuereinheit und anderen Vorrichtungen ermöglicht.

2. Digitale elektronische Steuereinheit nach Anspruch 1, **dadurch gekennzeichnet, dass** die genannte Fernsteuerungsschnittstelleneinheit (R) eine Infrarot- oder Ultraschall- oder Funkfrequenz-Fernsteuerungsschnittstelleneinheit ist.

3. Digitale elektronische Steuereinheit nach Anspruch 1, **dadurch gekennzeichnet, dass** die genannte Fernsteuerungsschnittstelleneinheit (R) eine Funkfrequenz-Fernsteuerungsschnittstelleneinheit ist.

4. Digitale elektronische Steuereinheit nach Anspruch 1, **dadurch gekennzeichnet, dass** die genannte Fernsteuerungsschnittstelleneinheit (R) eine Ultraschall-Fernsteuerungsschnittstelleneinheit ist.

5. Digitale elektronische Steuereinheit nach Anspruch 1, **dadurch gekennzeichnet, dass** die genannte Netzschnittstelleneinheit (N) für ein auf Transport Control Protocol/Internet Protocol (TCP/IP) gestütztes Netzwerk ist, wie z.B. für Internetkonnektivität.

6. Digitale elektronische Steuereinheit nach Anspruch 1, **dadurch gekennzeichnet, dass** die genannte Netzschnittstelleneinheit (N) für ein auf CAN-Bus (Controller Area Network Bus) gestütztes Netzwerk ist.

7. Digitale elektronische Steuereinheit nach Anspruch 1, **dadurch gekennzeichnet, dass** die genannte Netzschnittstelleneinheit (N) für ein Kabelnetz ist.

8. Digitale elektronische Steuereinheit nach Anspruch 1, **dadurch gekennzeichnet, dass** die genannten Messgeber (1a-1d) lineare oder nichtlineare Wandler sind.

9. Digitale elektronische Steuereinheit nach Anspruch 1, **dadurch gekennzeichnet, dass** die genannte zentrale Steuereinheit (6) und die genannten Linearitäts-, Empfindlichkeits- und Offsetkorrekturschaltungen digitale logische Schaltungen sind.

10. Digitale elektronische Steuereinheit nach Anspruch 1, **dadurch gekennzeichnet, dass** der Ausgang jedes der genannten Steuer-Haltespeicher (9a-9f) mit der Ausgangsansteuer- und Schutzschaltung (10a-10f) verbunden ist zum Ansteuern einer externen Schaltvorrichtung (11a-11f) zum Betätigen des notwendigen Teils des Geräts, um den abgetasteten Parameter zu korrigieren.

11. Digitale elektronische Steuereinheit nach Anspruch 1, **dadurch gekennzeichnet, dass** zum Bereitstellen von benutzerdefinierten Eingaben und Auswahlen zum Definieren der gewünschten Werte der Steuerparameter eine Mehrzahl von Benutzereingabemitteln durch den genannten Analogmultiplexer (3), den genannten Analog-Digital-Wandler (4) und die genannte Linearitäts-, Empfindlichkeits- und Offsetkorrektureinheit (5) mit der genannten zentralen Steuereinheit (6) verbunden ist.

12. Digitale elektronische Steuereinheit nach Anspruch 11, **dadurch gekennzeichnet, dass** die anwendervariablen Mittel Potentiometer oder Schalter (12a-12c, 20a-20c) sind.

13. Digitale elektronische Steuereinheit nach Anspruch 11, **dadurch gekennzeichnet, dass** mit dem Ausgang der genannten zentralen Steuereinheit (6) eine Anzeigenansteuereinheit (13) für das selektive Anzeigen von entweder dem abgetasteten Parameter oder dem vom Benutzer angegebenen Wert von dem Benutzereingabemittel auf einer externen Anzeigevorrichtung (14) verbunden ist.

14. Digitale elektronische Steuereinheit nach Anspruch 1, **dadurch gekennzeichnet, dass** eine Audioansteuereinheit (15) zum Erzeugen von Audiosignalen als Hinweise für den Benutzer mithilfe eines externen Audiowandlers (16) mit dem Ausgang der genannten zentralen Steuereinheit (6) verbunden ist.

15. Digitale elektronische Steuereinheit nach Anspruch 1, **dadurch gekennzeichnet, dass** die Stromversorgung (29) zum Betreiben der digitalen elektronischen Steuereinheit aus einem verlustarmen kapazitiven spannungsverringernden Netz (30) gefolgt von einer Spannungsbegrenzungsvorrichtung (31), einem Gleichrichter und einem Filternetz (32, 33) zum Erzeugen einer Gleichspannung besteht.

16. Digitale elektronische Steuereinheit nach einem der vorhergehenden Ansprüche, **dadurch gekennzeichnet, dass** die gesamte digitale elektronische Steuereinheit mit der Echtzeituhr (R), der Fernsteuerungsschnittstelleneinheit (R) und der Netzschnittstelleneinheit (N) mit Ausnahme von Stromversorgung, Messgebern, anwendervariablen Mitteln und exernen Schaltvorrichtungen als spezielle anwendungsspezifische integrierte Schaltung (ASIC - Application Specific Intergrated Circuit) (22) ausgeführt ist, um ein Miniatur- und kostengünstiges Steuerelement bereitzustellen.

17. Digitale elektronische Steuereinheit nach Anspruch 16, **dadurch gekennzeichnet, dass** die ASIC auch den nichtflüchtigen Speicher ausschließt, um eine größere Speicherkapazität für Daten bereitzustellen, aber einen Speicherschnittstellenblock (23) zum Verbinden mit einem externen nichtflüchtigen Speicher (24) aufweist.

18. Digitale elektronische Steuereinheit nach Anspruch 10, **dadurch gekennzeichnet, dass** die Ausgangsansteuer- und Schutzschaltung (10a-10f) eine Thermoschutzschaltung (26), eine Überstromschutzschaltung (25), eine Überspannungsschutzschaltung (27) und eine Soft-Start-Schaltung (28) zum Bereitstellen eines effektiven Starts mit verringerter Spannung für die Last während der anfänglichen Einschaltperiode aufweist.

19. Digitale elektronische Steuereinheit nach Anspruch 1, **dadurch gekennzeichnet, dass** die Frequenz des Taktgebers (18) von 32 kHz - 25 MHz reicht.

20. Digitale elektronische Steuereinheit nach Anspruch 19, **dadurch gekennzeichnet, dass** die Frequenz des Taktgebers (18) vorzugsweise 4 MHz beträgt.

## Revendications

1. Unité de commande électronique numérique servant à commander les fonctions d'appareils domestiques et commerciaux comprenant :
- une pluralité de circuits de commande de capteurs (2a à 2d) qui commandent chacun un élément de détection externe (1a à 1d), lesdits éléments de détection (1a à 1d) convertit le paramètre détecté en un signal électrique,
- un multiplexeur analogique (3) qui reçoit le signal depuis chacun des éléments de détection externes (1a à 1d), et achemine sélectivement l'un du signal vers sa sortie,
- un convertisseur analogique-numérique (4) connecté à la sortie dudit multiplexeur analogique (3), qui convertit la sortie du multiplexeur sous forme numérique,
- un circuit de correction de linéarité, sensibilité et décalage (5) connecté à la sortie dudit convertisseur analogique-numérique (4) pour corriger les valeurs numériques reçues de celui-ci, au moyen de données d'étalonnage de capteur mémorisées dans une mémoire rémanente (17),
- une unité de commande centrale (6) qui reçoit la sortie corrigée dudit circuit de correction de linéarité, sensibilité et décalage (5), et génère les signaux de commande nécessaires au fonctionnement d'un appareil, ainsi que les signaux de sélection pour commander ledit multiplexeur analogique (3), au moyen de données de commande fournies par la mémoire rémanente (17),
- un filtre de bruit numérique (7) connecté à la sortie de ladite unité de commande centrale (6) afin d'éliminer les sorties parasites,
- un dé-multiplexeur numérique (8) connecté à la sortie dudit filtre de bruit numérique (7) et commandé par ladite unité de commande centrale (6) pour sélectionner la sortie à laquelle l'entrée provenant dudit filtre de bruit numérique doit être connectée,
- une pluralité de verrous de commande (9a à 9f), chacun connecté à une sortie dudit dé-multiplexeur numérique (8), pour mémoriser les données numériques reçues de celui-ci et actionner la partie nécessaire de l'appareil en vue de corriger le paramètre détecté,
- une mémoire rémanente (17) qui mémorise les données et paramètres de commande requis pour le fonctionnement desdits unité de commande centrale (6), circuits de correction de linéarité, sensibilité et décalage (5), circuits de commande et de protection de sortie (10a à 10f),
- un oscillateur d'horloge (18) qui fournit les signaux de cadencement nécessaires au fonctionnement des circuits requis de l'unité de commande électronique numérique,
**caractérisée en ce que**,
- ladite unité de commande centrale (6) est en outre connectée à au moins l'un des éléments suivants à son entrée :
- une horloge temps réel (C) qui fournit des données d'heure de la journée,
- une unité d'interface de commande à distance (R), qui donne la possibilité de recevoir une entrée d'utilisateur et de fournir des réponses à l'utilisateur depuis/vers un dispositif de commande à distance,
- une unité d'interface réseau (N), qui donne la capabilité de transférer bidirectionnellement des données entre l'unité de commande numérique et d'autres dispositifs.

2. Unité de commande électronique numérique selon la revendication 1, **caractérisée en ce que** ladite unité d'interface de commande à distance (R) est une unité d'interface à distance infrarouge ou à ultrasons ou à fréquences radioélectriques.

3. Unité de commande électronique numérique selon la revendication 1, **caractérisée en ce que** ladite unité d'interface de commande à distance (R) est une unité d'interface à distance à fréquences radioélectriques.

4. Unité de commande électronique numérique selon la revendication 1, **caractérisée en ce que** ladite unité d'interface de commande à distance (R) est une unité d'interface à distance à ultrasons.

5. Unité de commande électronique numérique selon la revendication 1, **caractérisée en ce que** ladite unité d'interface réseau (N) est destinée à un réseau basé sur le Protocole de Commande de Transport/Protocole Internet (TCP/IP) tel que pour la connectivité Internet.

6. Unité de commande électronique numérique selon la revendication 1, **caractérisée en ce que** ladite unité d'interface réseau (N) est destinée à un réseau basé sur le Bus de Contrôleur de Réseau local (CAN).

7. Unité de commande électronique numérique selon la revendication 1, **caractérisée en ce que** ladite unité d'interface réseau (N) est destinée à un réseau câblé.

8. Unité de commande électronique numérique selon la revendication 1, **caractérisée en ce que** ledit élément de détection (1a à 1d) sont des transducteurs linéaires ou non linéaires.

9. Unité de commande électronique numérique selon la revendication 1, **caractérisée en ce que** ladite unité de commande centrale (6) et ledit circuit de correction de linéarité, sensibilité et décalage 5 sont des circuits logiques numériques.

10. Unité de commande électronique numérique selon la revendication 1, **caractérisée en ce que** la sortie de chacun desdits verrous de commande (9a à 9f) est connectée aux circuits de commande et de protection de sortie (10a à 10f) pour commander un dispositif de commutation externe (11a à 11f) afin d'actionner la partie nécessaire de l'appareil en vue de corriger le paramètre détecté.

11. Unité de commande électronique numérique selon la revendication 1, **caractérisée en ce qu'**afin de fournir des entrées définies par l'utilisateur et des sélections pour définir les valeurs désirées des paramètres de commande, une pluralité de moyens d'entrées d'utilisateur est connectée à ladite unité de commande centrale (6) par le biais desdits multiplexeur analogique (3), convertisseur analogique-numérique (4), et unité de correction de linéarité, sensibilité et décalage (5).

12. Unité de commande électronique numérique selon la revendication 11, **caractérisée en ce que** les moyens de variables d'utilisateur sont des potentiomètres ou commutateurs (12a à 12c, 20a à 20c).

13. Unité de commande électronique numérique selon la revendication 11, **caractérisée en ce qu'**une unité de commande d'affichage (13) est connectée à la sortie de ladite unité de commande centrale (6) pour l'affichage sélectif soit du paramètre sélectionné, soit de la valeur spécifiée par l'utilisateur provenant des moyens d'entrée d'utilisateur sur un dispositif d'affichage externe (14).

14. Unité de commande électronique numérique selon la revendication 1, **caractérisée en ce qu'**une unité de commande audio (15) est connectée à la sortie de ladite unité de commande centrale (6) pour générer des signaux audio à l'attention de l'utilisateur au moyen d'un transducteur audio externe (16).

15. Unité de commande électronique numérique selon la revendication 1, **caractérisée en ce qu'**une alimentation électrique (29) pour alimenter l'unité de commande électronique numérique consiste en un réseau à chute de tension capacitif de faible perte (30) suivi d'un dispositif de fixation de niveau de tension (31), d'un réseau à redresseur et filtre (32, 33) afin de fournir une tension continue.

16. Unité de commande électronique numérique selon l'une quelconque des revendications précédentes, **caractérisée en ce que** toute l'unité de commande électronique numérique comportant l'horloge temps réel (R), l'unité d'interface de commande à distance (R) et l'unité d'interface réseau (N) sauf l'alimentation électrique, les éléments de détection, les moyens de variables d'utilisateur et les dispositifs de commutation externes, est mise en oeuvre en tant que Circuit intégré spécifique à l'Application (ASIC) personnalisé (22), afin de fournir un élément de commande miniature et rentable.

17. Unité de commande électronique numérique selon la revendication 16, **caractérisée en ce que** l'ASIC est aussi dépourvu de mémoire rémanente afin de fournir de plus grandes capacités de mémorisation de données, mais comporte un bloc d'interface mémoire (23) pour la connexion à une mémoire rémanente externe (24).

18. Unité de commande électronique numérique selon la revendication 10, **caractérisée en ce que** le circuit de commande et de protection de sortie (10a à 10f) comporte un circuit de protection thermique (26), un circuit de protection contre les surintensités (25), un circuit de protection contre les surtensions (27) et un circuit de mise sous tension sans appel de courant (28) pour assurer un démarrage efficace à tension réduite jusqu'à la charge durant la période initiale de mise en marche.

19. Unité de commande électronique numérique selon la revendication 1, **caractérisée en ce que** la fréquence de l'oscillateur d'horloge (18) s'étend de 32 kHz à 25 MHz.

20. Unité de commande électronique numérique selon la revendication 19, **caractérisée en ce que** la fréquence de l'oscillateur d'horloge (18) est de préférence de 4 MHz.
